# EUROPÄISCHE PATENTSCHRIFT

(11) **EP 3 350 037 B1**
(45) Veröffentlichungstag und Bekanntmachung des Hinweises auf die Patenterteilung: **24.03.2021**
(21) Anmeldenummer: 16760051.9
(22) Anmeldetag: 31.08.2016
(51) Int. Cl.: B60T 8/18

(54) **AUTOMATISCHE ADAPTION DER BREMSKRAFTVERSTÄRKUNG AN UNTERSCHIEDLICHE BREMSLASTEN**
AUTOMATIC ADAPTATION OF BRAKE BOOST TO DIFFERENT BRAKING LOADS
ADAPTATION AUTOMATIQUE DE LA FORCE DE FREINAGE À DIFFÉRENTES CHARGES DE FREINAGE

(30) Priorität: 18.09.2015 DE 102015217905
(43) Veröffentlichungstag der Anmeldung: 25.07.2018
(73) Patentinhaber: Volkswagen Aktiengesellschaft, 38440 Wolfsburg (DE)
(72) Erfinder: BORCHERS, Frank, 38536 Meinersen (DE); SCHMALBRUCH, Michael, 38324 Kissenbrück (DE); SCHINELLER, Leo, 38553 Wasbüttel (DE)
(86) Internationale Anmeldenummer: PCT/EP2016/070503
(87) Internationale Veröffentlichungsnummer: WO 2017/045922

(56) Entgegenhaltungen:
- CN-A- 104 837 695
- US-A1- 2010 049 415

## Beschreibung

Die Erfindung betrifft ein Verfahren zum Betreiben eines elektromechanischen Bremskraftverstärkers eines Kraftfahrzeugs. Zum Steuern des Bremskraftverstärkers wird eine Pedalkraft an einem Bremspedal ermittelt und in Abhängigkeit von der Pedalkraft mittels des Bremskraftverstärkers ein Bremsdruck derart eingestellt, dass sich unter Normalbedingungen eine vorbestimmte Normverzögerung des Kraftfahrzeugs ergibt. Zu der Erfindung gehören auch eine Steuervorrichtung zum Steuern eines Bremskraftverstärkers sowie ein Bremskraftverstärker mit der Steuervorrichtung.

In elektromechanischen Bremskraftverstärkern ist heutzutage konstruktiv eine Verstärkungskennlinie zur Unterstützung der Fußbremskraft oder Pedalkraft des Fahrers hinterlegt. Diese Verstärkungskennlinie stellt einen Kompromiss gegenüber den Fahrerbedürfnissen und den geltenden Gesetzesanforderungen dar. Auf der Grundlage der Verstärkungskennlinie ergibt sich eine Verzögerungsleistung in Abhängigkeit von der Pedalkraft, die bei einem vorgegebenen Fahrzeuggewicht auf ebener Fahrstrecke eine vorbestimmte Fahrzeugverzögerung oder Geschwindigkeitsverringerung ergibt, die hier als Normverzögerung bezeichnet wird. Bei gleicher Pedalkraft variiert allerdings die Fahrzeugverzögerung, wenn Störgrößen vorliegen, wie beispielsweise eine zusätzliche Beladung des Fahrzeugs oder ein Anhänger, oder wenn das Kraftfahrzeug auf einer geneigten Straße steht.

Aus der DE 10 2009 047 122 A1 ist ein Verfahren zum Steuern eines steuerbaren elektromechanischen Bremskraftverstärkers bekannt. Bei dem Verfahren wird mittels des Bremskraftverstärkers das Fahrzeug im Stillstand gehalten. Um hierbei nicht unnötig elektrische Energie zum Betreiben des Bremskraftverstärkers zu verbrauchen, wird die vom Bremskraftverstärker aufgebrachte Unterstützungskraft auf ein Minimum reduziert, so dass sich das Kraftfahrzeug auch bei verringerter Unterstützungskraft gerade nicht aus dem Stillstand löst.

Aus Dokument US 2010/0049415 A1 ist bekannt, bei einem Kraftfahrzeug dessen aktuelle Masse zu ermitteln und für den Fall, dass ein Fahrer ein Bremspedal bedient, mittels eines Bremskraftverstärkers das Bremsmoment in Abhängigkeit von der ermittelten Masse einzustellen, um hierdurch dem Fahrer ein gleichbleibendes Bremsverhalten anzubieten. Die Adaption des Bremsmoments erfolgt kontinuierlich in Abhängigkeit von dem jeweils aktuell vorliegenden Wert der Masse.

Der Erfindung liegt die Aufgabe zugrunde, Auswirkungen von Störgrößen, wie beispielsweise eine Fahrzeugzuladung, bei einem Bremsvorgang zu verringern.

Die Aufgabe wird durch die Gegenstände der unabhängigen Patentansprüche und 7 gelöst. Vorteilhafte Weiterbildungen der Erfindung sind durch die Merkmale der abhängigen Patentansprüche gegeben.

Durch die Erfindung ist ein Verfahren zum Betreiben eines elektromechanischen Bremskraftverstärkers eines Kraftfahrzeugs bereitgestellt. Durch das Verfahren wird während einer Rollbewegung des Kraftfahrzeugs dessen Fahrgeschwindigkeit verringert. Hierzu wird durch eine Steuervorrichtung eine von einem Benutzer an einem Bremspedal ausgeübte Pedalkraft ermittelt und aus der ermittelten Pedalkraft durch eine Stelleinheit ein einzustellender Bremsdruck ermittelt. Die Stelleinheit dient also zur Pedalkraft-Bremsdruck-Zuordnung. Durch Betreiben des Bremskraftverstärkers wird dann der einzustellende Bremsdruck in Reibbremsen des Kraftfahrzeugs eingestellt und hierdurch eine vom dem eingestellten Bremsdruck abhängige Fahrzeugverzögerung des Kraftfahrzeugs bewirkt. Unter Fahrzeugverzögerung ist im Zusammenhang mit der Erfindung eine negative Beschleunigung zu verstehen, also die Verringerung der Fahrgeschwindigkeit. Die beschriebene Stelleinheit weist als Eingangswert die ermittelte Pedalkraft auf und stellt als Ausgangswert den einzustellenden Bremsdruck bereit. Die sich hierdurch ergebende Pedalkraft-Bremsdruck-Zuordnung ist im Stand der Technik in der Regel durch eine Verstärkungskennlinie definiert, die einen Kompromiss für unterschiedliche Fahrsituationen darstellt. Auch bei der besagten Stelleinheit gibt es eine solche Konfiguration, die hier als Normkonfiguration bezeichnet ist. Falls zumindest eine vorbestimmte Störgröße einen jeweils vorbestimmten Normwert aufweist, wird gemäß der Normkonfiguration zu der Pedalkraft ein solcher einzustellender Bremsdruck ermittelt, durch welchen eine vorbestimmte Normverzögerung des Kraftfahrzeugs bewirkt wird. Beispielsweise wird also bei unbeladenem Fahrzeug ohne Anhänger und auf ebener Strecke (Normwerte der Störgrößen Beladung, Anhänger und Gefälle) bei gegebener Pedalkraft die Normverzögerung bewirkt. Die Normverzögerung ist hierbei natürlich eine Funktion der Pedalkraft, d.h. unterschiedliche Kraftwerte der Pedalkraft ergeben unterschiedliche Verzögerungswerte der Normverzögerung, weil eine größerer Pedalkraftwert einen größeren Verzögerungswert ergibt als ein kleinerer Pedalkraftwert.

Bei beladenem Fahrzeug und/oder mit Anhänger und/oder an einem Gefälle muss der Fahrer aber in der Regel damit rechnen, dass sich bei gleicher Pedalkraft nicht die Normverzögerung ergibt, sondern das Kraftfahrzeug träger reagiert. Bei dem erfindungsgemäßen Verfahren ist dieser Effekt nun ganz oder zumindest teilweise kompensiert. Hierzu ist erfindungsgemäß vorgesehen, dass die Stelleinheit zumindest einen Stellparameter zum Einstellen einer von der Normkonfiguration verschiedenen Kompensationskonfiguration aufweist. Die Konfigurationen ergeben sich somit durch den jeweiligen Wert des zumindest einen Stellparameters. Durch eine Erfassungseinrichtung wird ein jeweiliger Istwert der zumindest einen Störgröße erfasst. Die Kompensationskonfiguration wird in Abhängigkeit von einem jeweiligen Unterschied jedes ermittelten Istwerts zu dem jeweiligen Normwert des zumindest einen Stellparameters wird durch Einstellen des zumindest einen Stellparameters eingestellt. Der Unterschied muss hierbei nicht explizit berechnet werden. Es kann auch vorgesehen sein, in Abhängigkeit von dem jeweiligen Istwert der zumindest einen Störgröße unmittelbar den jeweiligen Parameterwert des zumindest einen Stellparameters einzustellen. Hierbei ergibt sich ebenfalls die besagte Abhängigkeit von dem Unterschied zwischen Istwert und Normwert.

Durch die Erfindung ergibt sich der Vorteil, dass bei dem Kraftfahrzeug die Stelleinheit auf die zumindest eine Störgröße reagiert, indem zu jeder Störgröße ein Istwert erfasst wird und beim Ermitteln des einzustellenden Bremsdrucks jeder erfasst Istwert berücksichtigt wird. So ist man nicht nur die Normkonfiguration beschränkt, sondern es kann auch eine Kompensationskonfiguration eingestellt werden. So kann während der Fahrt die Fahrzeugverzögerung an die aktuelle Belastung des Kraftfahrzeugs angepasst werden.

Die Erfindung basiert auf dem bekannten Ansatz, den Bremsdruck mittels einer Verstärkungskennlinie bereitzustellen. Um hierbei auch die Anpassung an die Istwerte der Störgrößen zu ermöglichen, sieht die Erfindung vor, dass bei der Stelleinheit die Normkonfiguration durch eine erste Verstärkungskennlinie bereitgestellt ist und zumindest eine weitere Verstärkungskennlinie für eine jeweilige Kompensationskonfiguration bereitgestellt ist. In Abhängigkeit von dem jeweiligen erfassten Istwert der zumindest einen Störgröße wird zwischen den Verstärkungskennlinien umgeschaltet. Hierdurch ist dann jeweils diejenige Verstärkungskennlinie aktiviert oder zum Ermitteln des einzustellenden Bremsdrucks zugrundegelegt, durch welche sich die Normverzögerung bei vorgegebener Pedalkraft ergibt, obwohl die Störgrößen nicht den jeweiligen Normwert aufweisen. Die Verstärkungskennlinie der Normkonfiguration wird eingestellt, falls der jeweilige Istwert der zumindest einen Störgröße dem jeweiligen Normwert entspricht. Hierbei können natürlich auch Toleranzintervalle vorgesehen sein.

Zu der Erfindung gehören auch optionale Weiterbildungen, durch deren Merkmale sich zusätzliche Vorteile ergeben.

Im Zusammenhang mit der Kompensationskonfiguration ist natürlich bevorzugt vorgesehen, den Einfluss der Störgrößen auf die Fahrzeugverzögerung zu kompensieren. Gemäß einer Weiterbildung wird daher eine solche Kompensationskonfiguration eingestellt, bei welcher die Fahrzeugverzögerung eine geringere Abweichung von der Normverzögerung, d.h. einen geringeren Unterschied zur Normverzögerung aufweist als bei der Normkonfiguration, falls der jeweilige Istwert der zumindest einen Störgröße von dem jeweiligen Normwert abweicht. Wird also der zumindest eine Stellparameter nicht eingestellt, so dass die Normkonfiguration in der Stelleinheit beibehalten wird, so erfährt das Kraftfahrzeug eine geringere Fahrzeugverzögerung bei Beladung und/oder mit Anhänger und/oder bei Gefälle, als es sich mit der Kompensationskonfiguration ergibt. Es ergibt sich somit der Vorteil, dass der Fahrer beladungsunabhängig bei gegebener Pedalkraft stets die Normverzögerung oder zumindest eine größere Fahrzeugverzögerung als mit der Normkonfiguration bereitgestellt bekommt.

Eine Ausführungsform berücksichtigt als Störgröße die Beladung des Kraftfahrzeugs. Bei dieser Weiterbildung umfasst die zumindest eine Störgröße die Beladung des Kraftfahrzeugs und als Istwert wird die aktuelle Beladung des Kraftfahrzeugs erfasst. Mit anderen Worten wird beispielsweise ein Gewicht oder eine Masse der Last oder Beladung oder Fracht im Kraftfahrzeug ermittelt. Dies kann beispielsweise durch Sensoren der automatischen Fahrgeschwindigkeitsregelung (ACC - Automatic Cruise Control) oder der elektronischen Stabilitätskontrolle (ESC - Electronic Stability Control) durchgeführt werden. Es kann beispielsweise ein Einfederweg zumindest eines Stoßdämpfers des Kraftfahrzeugs ermittelt werden und in Abhängigkeit von dem Einfederweg auf das Gewicht oder die Masse der Beladung rückgeschlossen werden. Die Beladung kann z.B. durch das jeweilige Steuergerät der ACC oder ESC bereitgestellt werden.

Gemäß einer Weiterbildung umfasst die zumindest eine Störgröße eine an das Kraftfahrzeug angehängte Hängerlast eines Anhängers und als Istwert wird die aktuelle Hängerlast erfasst. Die Hängerlast kann beispielsweise das Gewicht oder die Masse des Anhängers und/oder ein Baumodell des Anhängers angeben. Die Hängerlast kann beispielsweise durch ein in dem Anhänger bereitgestelltes Hängersteuergerät ermittelt werden.

Gemäß einer Weiterbildung umfasst die zumindest eine Störgröße ein Gefälle eines Fahruntergrunds, über welchen das Kraftfahrzeug rollt. Als Istwert wird ein mit dem aktuellen Gefälle korrelierter Neigungswert ermittelt. Mit anderen Worten wird die Bodenneigung oder das Straßengefälle erfasst. Dies kann beispielsweise indirekt über die Fahrzeugneigung ermittelt werden, wobei hier eigene Nickbewegungen des Kraftfahrzeugs bezüglich des Bodens beispielsweise durch eine Mittelwertbildung zu kompensieren oder heraus zu rechnen sind. Das Gefälle des Fahruntergrunds kann auch beispielsweise auf der Grundlage einer digitalen Straßenkarte ermittelt werden, in welcher auch das Straßengefälle und/oder Höhenangaben enthalten sind. Durch Berücksichtigen des Bodengefälles ergibt sich der Vorteil, dass auch die erhöhte Schubkraft bei Bergabfahrt beim Einstellen des Bremsdruckes berücksichtigt wird.

Gemäß einer Weiterbildung wird durch die Erfassungseinrichtung der jeweilige Istwert zyklisch erfasst und der zumindest eine Stellparameter entsprechend zyklisch eingestellt. Mit anderen Worten wird die Pedalkraft-Bremsdruck-Zuordnung der Stelleinheit zyklisch an den jeweiligen aktuellen Istwert der zumindest einen Störgröße angepasst. Damit wird das Zuordnungsverhalten der Stelleinheit durch eine Regelung angepasst.

Zu der Erfindung gehört auch eine Steuervorrichtung für einen elektromechanischen Bremskraftverstärker. Die Steuervorrichtung weist einen Signaleingang zum Empfangen des jeweiligen Istwerts der zumindest einen Störgröße und einen Signalausgang zum Steuern einer elektrischen Antriebseinheit des Bremskraftverstärkers auf. Die Steuervorrichtung ist dazu eingerichtet, eine Ausführungsform des erfindungsgemäßen Verfahrens durchzuführen. Hierdurch erzeugt die Steuervorrichtung in Abhängigkeit von jedem empfangenen Istwert am Signalausgang ein Steuersignal für die Antriebseinheit des Bremskraftverstärkers, durch welches die Normverzögerung bei entsprechender Pedalkraft eingestellt wird, auch wenn die zumindest eine Störgröße nicht den jeweiligen Normwert aufweist.

Zu der Erfindung gehört auch ein elektromechanischer Bremskraftverstärker, der eine Ausführungsform der erfindungsgemäßen Steuervorrichtung aufweist.

Schließlich gehört zu der Erfindung auch ein Kraftfahrzeug, welches eine Ausführungsform des erfindungsgemäßen Bremskraftverstärkers aufweist. Des Weiteren ist eine Erfassungseinrichtung zum Erfassen eines jeweiligen Istwerts zumindest einer Störgröße bereitgestellt, wobei die Erfassungseinrichtung mit dem Signaleingang der Steuervorrichtung des Bremskraftverstärkers gekoppelt ist, so dass der jeweilige erfasste Istwert an die Steuervorrichtung übertragen werden kann.

Das erfindungsgemäße Kraftfahrzeug ist bevorzugt als Kraftwagen, insbesondere als Personenkraftwagen oder Lastkraftwagen, ausgestaltet.

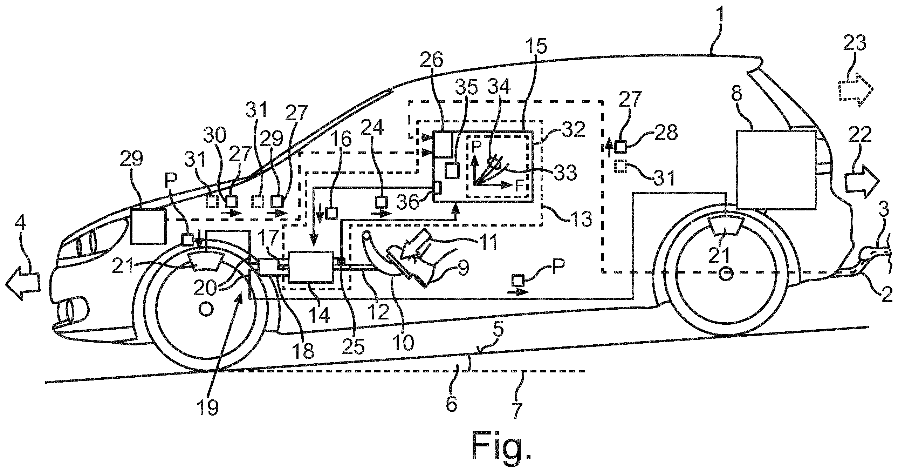

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 1, bei dem es sich beispielsweise um einen Kraftwagen, insbesondere einen Personenkraftwagen oder Lastkraftwagen, handeln kann. An eine Anhängerkupplung 2 des Kraftfahrzeugs 1 kann ein (nicht näher dargestellter) Anhänger 3 angehängt sein. Das Kraftfahrzeug 1 fährt in dem gezeigten Beispiel mit einer Fahrgeschwindigkeit 4 über einen Fahruntergrund 5. Beispielsweise kann das Kraftfahrzeug 1 bergab rollen. Mit anderen Worten weist der Fahruntergrund 5 ein Gefälle 6 auf, das beispielsweise als Bodenneigung oder Winkel bezüglich einer Horizontalen 7 definiert sein kann. Das Kraftfahrzeug 1 kann des Weiteren beladen sein, das heißt eine temporäre oder entnehmbare Beladung oder Ladung 8 kann sich in einem Laderaum oder auf einer Ladefläche des Kraftfahrzeugs 1 befinden.

In dem gezeigten Beispiel möchte ein Fahrer 9 die Fahrgeschwindigkeit 4 des Kraftfahrzeugs 1 verringern. Von dem Fahrer 9 ist in der Figur nur ein Fuß dargestellt. Zum Abbremsen oder Verringern der Fahrgeschwindigkeit 4 übt der Fahrer 9 mit dem Fuß an einem Bremspedal 10 eine Pedalkraft 11 aus. Mit anderen Worten beaufschlagt der Fahrer 9 das Bremspedal 10 mit der Fußkraft oder Pedalkraft 11.

Die Pedalkraft 11 kann über eine Kolbenstange 12 in einen elektromechanischen Bremskraftverstärker 13 übertragen werden. Hier wirkt zusätzlich eine elektrische Antriebseinheit 14 auf die Kolbenstange 12. Die Antriebseinheit 14 kann beispielsweise einen Elektromotor aufweisen, der beispielsweise über ein Schneckengetriebe auf die Kolbenstange 12 einwirkt. Hierdurch wird die Pedalkraft 11 verstärkt. Die Antriebseinheit 14 kann durch eine Steuervorrichtung 15 gesteuert sein, die hierzu ein Steuersignal oder Stellsignal 16 für die Antriebseinheit 14 erzeugt. Die Steuervorrichtung 15 kann beispielsweise einen Microcontroller oder Microprozessor umfassen.

Die verstärkte Pedalkraft kann über eine Druckstange 17 in einen Hauptzylinder 18 eines hydraulischen Bremskreises 19 übertragen werden. Hierdurch wird in hydraulischen Bremsleitungen 20 ein Bremsdruck P eingestellt, der in Reibbremsen 21 des Kraftfahrzeugs 1 in an sich bekannter Weise wirkt. Durch die Reibbremsen 21 wird eine Fahrzeugverzögerung 22 bewirkt, welche die Fahrzeuggeschwindigkeit 4 verringert.

Der Fahrer 9 kann hier bei unbelastetem Kraftfahrzeug 1, also ohne die Ladung 8 und ohne den Anhänger 3, auf ebenem Fahruntergrund für einen gegebenen Wert der Pedalkraft 11 eine vorbestimmte Normverzögerung 23 erhalten, also eine vorbestimmten negativen Beschleunigungswert. Die Steuervorrichtung 15 stellt hierzu das Stellsignal 16 in Abhängigkeit von einem Sensorsignal 24 ein. Das Sensorsignal 24 wird durch einen Sensor 25 erzeugt, welcher beispielsweise an der Kolbenstange 12 die Pedalkraft 11 erfasst oder ermittelt.

Die Steuervorrichtung 15 kann eine Stelleinheit 32 aufweisen, durch welche sich die beschriebene Pedalkraft-Bremsdruck-Zuordnung ergibt, also eine Zuordnung des Kraftwerts F der Bremskraft 11 zu dem einzustellenden Bremsdruck P. Die Stelleinheit 32 kann beispielsweise durch ein Programmmodul der Steuervorrichtung 15 realisiert sein. Die Steuervorrichtung 15 kann beispielsweise durch ein Steuergerät realisiert sein. Zu dem Hängergewicht des Anhängers 3, dem Beladungsgewicht der Beladung 8 und dem Gefällewert des Gefälle 6 ist jeweils eine Normwert 31 vorgesehen, für welche sich bei gegebener Pedalkraft 11 die Normverzögerung 23 ergibt. Die Normverzögerung 23 bei Normwerten 31 wird hierbei durch eine Verstärkungskennlinie 33 bewirkt, die eine Standardkennlinie oder Normkennlinie 33 darstellt. Wird diese Normkennlinie 33 verwendet, so befindet sich die Steuervorrichtung 15 in einer Normkonfiguration. Der jeweilige Normwert 31 kann z.B. besagen oder angeben, dass die Beladung 0 Kilogramm beträgt, kein Anhänger angekoppelt ist und keine Gefälle vorliegt (Steigung 0 Grad). Die Normkennlinie 33 stellt eine Normkonfiguration der Stelleinheit 32 dar.

Durch die Ladung 8 und den Anhänger 3 und das Gefälle 6 verhält sich das Kraftfahrzeug 1 träger. Mit anderen Worten stellen die Ladung 8, der Anhänger 3 und das Gefälle 6 jeweils eine Störgröße dar, durch welche sich bei gleicher Pedalkraft 11 nicht die Normverzögerung 23 ergeben würde, falls durch die Steuervorrichtung 15 das Stellsignal 16 nicht angepasst würde.

Um nun bei gegebener Pedalkraft 11, also bei gegebenem Wert des Sensorsignals 24, auch ein an die Störgrößen angepasstes Stellsignal 16 zu erzeugen, bei welchem die Störgrößen kompensiert sind, empfängt bei dem Kraftfahrzeug 1 die Steuervorrichtung 15 zusätzlich über einen Signaleingang 26 zu zumindest einer der Störgrößen einen jeweiligen Istwert 27. Beispielsweise kann von einem (nicht dargestellten) Anhängersteuergerät des Anhängers 3 als Istwert 27 ein Hängergewicht 28 und/oder ein Hängermodell als Istwert empfangen werden. Von einem Steuergerät 29 für eine ACC (Automatic Cruise Control) oder eine ESC (Electronic Stability Control) kann beispielsweise als Istwert 27 ein Beladungsgewicht 29 der Beladung 8 und/oder ein Gefällewert 30 des Gefälles 6 des Fahruntergrunds 5 empfangen werden. Der Gefällewert 30 kann z.B. ein Winkelwert eines Winkel der Oberfläche des Fahruntergrundes 5 bezüglich der Horizontalen 7 sein.

Zum Bewirken der Normverzögerung 23 auch bei Beladung 8 und/oder angehängtem Anhänger 3 und/oder bei Gefälle 6 sind in Abhängigkeit von den Istwerten 27 dieser Störgrößen jeweils andere Verstärkungskennlinien 34 nötig. Diese können durch die Steuervorrichtung 15 in der Stelleinheit 32 aktiviert werden. Die zusätzlichen Verstärkungskennlinien 34 stellen jeweils eine Kompensationskonfiguration dar.

Welche der Kennlinien 33, 34 in der Stelleinrichtung 32 aktiviert ist, also zum Ermitteln des einzustellenden Bremsdrucks P genutzt wird, kann durch einen Stellparameter 35 festgelegt werden, der in Abhängigkeit von den Istwerten 27 verändert oder eingestellt wird. Der Stellparameter 35 legt also die aktive Verstärkungskennlinie 33, 34 fest. Hierdurch ist stets eine Verstärkungskennlinie 33, 34 aktiv, durch welche sich bei gegebenen Istwerten 27 eine Fahrzeugverzögerung 22 ergibt, die möglichst ähnlich zur Normverzögerung 23 bei gegebener Pedalkraft 21 ist.

In Abhängigkeit von dem einzustellenden Bremsdruck P, wie er anhand der jeweils aktiven Verstärkungskennlinie 33, 34 ermittelt wird, wird dann durch die Steuervorrichtung 15 das Steuersignal 16 erzeugt. Das Stellsignal 26 wird an einem Signalausgang 36 bereitgestellt. Die Antriebseinheit 14 erzeugt dann den Bremsdruck P in den Bremsleitungen 20, so dass sich die Fahrzeugverzögerung 22 ergibt.

Die Form und/oder Anzahl der zusätzlichen Verstärkungskennlinien 34 und die Abhängigkeit zwischen Istwerten 24 zu den auszuwählenden Verstärkungskennlinien 34 ist ermittelbar beispielsweise durch einfache Versuche oder auf Grundlage von Gleichungen, welche die sich ergebende Fahrzeugverzögerung 22 in Abhängigkeit von den Störgrößen Beladung, Anhängerlast und Gefälle angibt. Diese Gleichungen sind an sich bekannt.

Mit der Erkennung der genannten Störgrößen kann also automatisch eine Umschaltung der Bremskraftverstärkung erfolgen, so dass für eine gewünschte Normverzögerung 23 die aufzuwendenden Bremspedalkraft gleich bleibt. Durch die Adaption verhält sich die Verzögerung des Kraftfahrzeugs 1 immer beladungsunabhängig und nominal zur Auslegung des Bremssystems. Das heißt es ergibt sich bei jedem Wert der Pedalkraft 11 der jeweils zugehörige Wert für die Normverzögerung 23. Die Störgrößen lassen sich erkennen durch bereits vorhandene Funktionen des Kraftfahrzeugs 1, welche den Zustand beispielsweise über einen Kommunikationsbus, beispielsweise einen CAN-Bus (CAN - Controller Area Network) an andere Empfänger-Steuergeräte übermitteln können, und damit auch an die Steuervorrichtung 15 des Bremskraftverstärkers 13.

Somit kann beim dynamischen Bremsen während der Fahrt in allen Fahrsituationen (Steigung/Gefälle) und bei unterschiedlicher Beladung dem Fahrer ein immer gleicher Zusammenhang zwischen Pedalkraft und Fahrzeugverzögerung bereitgestellt oder sichergestellt werden.

Insgesamt zeigt das Beispiel, wie durch die Erfindung eine automatische Adaption der Bremskraftverstärkung an unterschiedliche Bremslasten bereitgestellt werden kann.

**Bezugszeichenliste**

| | | | |
|---|---|---|---|
| 1 | Kraftfahrzeug | 30 | Gefällewert |
| 2 | Anhängerkupplung | 31 | Normwert |
| 3 | Anhänger | 32 | Stelleinheit |
| 4 | Fahrgeschwindigkeit | 33 | Normkennlinie |
| 5 | Fahruntergrund | 34 | Verstärkungskennlinie |
| 6 | Gefälle | 35 | Stellparameter |
| 7 | Horizontale Ebene | 36 | Stellausgang |
| 8 | Beladung | | |
| 9 | Fahrer | F | Kraftwert |
| 10 | Bremspedal | P | Bremsdruck |
| 11 | Pedalkraft | | |
| 12 | Kolbenstange | | |
| 13 | Bremskraftverstärker | | |
| 14 | Antriebseinheit | | |
| 15 | Steuervorrichtung | | |
| 16 | Steuersignal | | |
| 17 | Druckstange | | |
| 18 | Hauptzylinder | | |
| 19 | Hydraulisches Bremssystem | | |
| 20 | Bremsleitung | | |
| 21 | Reibbremsen | | |
| 22 | Fahrzeugverzögerung | | |
| 23 | Normverzögerung | | |
| 24 | Sensorsignal | | |
| 25 | Sensor | | |
| 26 | Signaleingang | | |
| 27 | Istwert | | |
| 28 | Hängerlast | | |
| 29 | Beladungsgewicht | | |
| 36 | Stell ausgang | | |
| F | Kraftwert | | |
| P | Bremsdruck | | |

## Patentansprüche

1. Verfahren zum Betreiben eines elektromechanischen Bremskraftverstärkers (13) eines Kraftfahrzeugs (1), um während einer Rollbewegung des Kraftfahrzeugs (1) dessen Fahrgeschwindigkeit (4) zu verringern, wobei durch eine Steuervorrichtung (15)
- eine von einem Benutzer (9) an einem Bremspedal (10) ausgeübte Pedalkraft (11) ermittelt wird,
- aus der ermittelten Pedalkraft (11) mittels einer Stelleinheit (32) zur Pedalkraft-Bremsdruck-Zuordnung ein einzustellender Bremsdruck (P) ermittelt wird und
- durch Betreiben des Bremskraftverstärkers (13) der einzustellende Bremsdruck (P) in Reibbremsen (21) des Kraftfahrzeugs (1) eingestellt und hierdurch eine von dem eingestellten Bremsdruck (P) abhängige Fahrzeugverzögerung (22) des Kraftfahrzeugs (1) bewirkt wird, wobei die Stelleinheit (32) eine Normkonfiguration (33) aufweist, in welcher zu der Pedalkraft (11) ein solcher einzustellender Bremsdruck (P) ermittelt wird, durch welchen eine vorbestimmte Normverzögerung (23) des Kraftfahrzeugs (1) bewirkt wird, falls zumindest eine vorbestimmte Störgröße (3, 6, 8) einen jeweils vorbestimmten Normwert (31) aufweist, und
- die Stelleinheit (32) zumindest einen Stellparameter (35) zum Einstellen einer von der Normkonfiguration (33) verschiedenen Kompensationskonfiguration (34) aufweist und
- durch eine Erfassungseinrichtung (26) ein jeweiliger Istwert (27) der zumindest einen Störgröße (3, 6, 8) erfasst wird und
- in Abhängigkeit von einem jeweiligen Unterschied jedes ermittelten Istwerts (27) zu dem jeweiligen Normwert (31) durch Einstellen des zumindest einen Stellparameters (35) der Stelleinheit (32) die Kompensationskonfiguration (34) eingestellt wird,
**dadurch gekennzeichnet, dass**
bei der Stelleinheit (32) die Normkonfiguration (33) durch eine Verstärkungskennlinie (33) bereitgestellt ist und zumindest eine weitere Verstärkungskennlinie (34) für eine jeweilige Kompensationskonfiguration (34) bereitgestellt ist und in Abhängigkeit von dem jeweiligen erfassten Istwert (27) der zumindest einen Störgröße (3, 6, 8) zwischen den Verstärkungskennlinien (33, 34) umgeschaltet wird.

2. Verfahren nach Anspruch 1, wobei eine solche Kompensationskonfiguration (34) eingestellt wird, bei welcher die Fahrzeugverzögerung (22) eine geringere Abweichung von der Normverzögerung (23) aufweist als bei der Normkonfiguration (33), falls der jeweilige Istwert der zumindest einen Störgröße (3, 6, 8) von dem jeweiligen Normwert abweicht.

3. Verfahren nach einem der vorhergehenden Ansprüche, wobei die zumindest eine Störgröße (8) eine Beladung (8) des Kraftfahrzeugs umfasst und als Istwert (27) die aktuelle Beladung (29) des Kraftfahrzeugs (1) erfasst wird.

4. Verfahren nach einem der vorhergehenden Ansprüche, wobei die zumindest eine Störgröße (3) eine an das Kraftfahrzeug (1) angehängte Hängerlast eines Anhängers (3) umfasst und als Istwert (27) die aktuelle Hängerlast (28) erfasst wird.

5. Verfahren nach einem der vorhergehenden Ansprüche, wobei die zumindest eine Störgröße (6) ein Gefälle (6) eines Fahruntergrunds (5), über welchen das Kraftfahrzeug (1) rollt, umfasst und als Istwert (27) ein mit dem aktuellen Gefälle (6) korrelierter Neigungswert (30) ermittelt wird.

6. Verfahren nach einem der vorhergehenden Ansprüche, wobei durch die Erfassungseinrichtung (29) der jeweilige Istwert zyklisch erfasst und der zumindest eine Stellparameter (35) zyklisch eingestellt wird.

7. Steuervorrichtung (15) für einen elektromechanischen Bremskraftverstärker (13), wobei die Steuervorrichtung (15) einen Signaleingang (26) zum Empfangen eines jeweiligen Istwerts (27) zumindest einer Störgröße (3, 6, 8) und einen Signalausgang (35) zum Steuern einer elektrischen Antriebseinheit (14) des Bremskraftverstärkers (13) aufweist und dazu ausgelegt ist ein Verfahren nach einem der vorhergehenden Ansprüche durchzuführen.

8. Elektromechanischer Bremskraftverstärker (15) mit einer Steuervorrichtung (15) nach Anspruch 7.

9. Kraftfahrzeug (1) mit einem elektromechanischen Bremskraftverstärker (13) nach Anspruch 8 und einer Erfassungseinrichtung (26) zum Erfassen eines jeweiligen Istwerts (27) zumindest einer Störgröße (3, 6, 8), wobei die Erfassungseinrichtung (29) mit dem Signaleingang (26) der Steuervorrichtung (15) des Bremskraftverstärkers (13) gekoppelt ist.

## Claims

1. Method for operating an electromechanical brake booster (13) of a motor vehicle (1) in order to reduce its speed of travel (4) during a rolling movement of said motor vehicle (1), wherein, via a control device (15),
- a pedal force (11) exerted on a brake pedal (10) by a user (9) is determined,
- a brake pressure (P) to be set is determined from the determined pedal force (11) by means of an actuating unit (32) for the pedal force braking/pressure association, and
- via operation of the brake booster (13), the brake pressure (P) to be set is set in friction brakes (21) of the motor vehicle (1), and a vehicle deceleration (22) of the motor vehicle (1) that is dependent on the set brake pressure (P) is hereby effected, wherein the actuation unit (32) has a standard configuration (33) in which such a brake pressure (P) to be set for the pedal force (11) is determined, via which a predetermined standard deceleration (23) of the motor vehicle (1) is effected in the event that at least one predetermined disturbance variable (3, 6, 8) has a respectively predetermined standard value (31), and
- the actuating unit (32) has at least one adjusting parameter (35) for setting a compensation configuration (34) differing from the standard configuration (33), and
- a respective actual value (27) of the at least one disturbance variable (3, 6, 8) is detected by a detection device (26), and
- the compensation configuration (34) is set depending on a respective difference of each determined actual value (27) and the respective standard value (31), by adjusting the at least one adjusting parameter (35) of the actuating unit (32),
**characterized in that**
in the actuating unit (32), the standard configuration (33) is provided by a characteristic boost curve (33), and at least one further characteristic boost curve (34) is provided for a respective compensation configuration (34), and switching between the characteristic boost curves (33, 34) takes place depending on the respective detected actual value (27) of the at least one disturbance variable (3, 6, 8).

2. Method according to claim 1, wherein such a compensation configuration (34) is set given which the vehicle deceleration (22) exhibits a smaller deviation from the standard deceleration (23) than given the standard configuration (33) in the event that the respective actual value of the at least one disturbance variable (3, 6, 8) deviates from the respective standard value.

3. Method according to any of the preceding claims, wherein the at least one disturbance variable (8) comprises a load (8) of the motor vehicle, and the active load (29) of the motor vehicle (1) is detected as an actual value (27).

4. Method according to any of the preceding claims, wherein the at least one disturbance variable (3) comprises a trailer load of a trailer (3) attached to the motor vehicle (1), and the current trailer load (28) is detected as an actual value (27).

5. Method according to any of the preceding claims, wherein the at least one disturbance variable (6) comprises a gradient (6) of a driving surface (5) over which the motor vehicle (1) rolls, and an inclination value (30) correlated with the current gradient (6) is determined as an actual value (27).

6. Method according to any of the preceding claims, wherein the respective actual value is cyclically detected by the detection device (29), and the at least one adjusting parameter (35) is cyclically set.

7. Control device (15) for an electromechanical brake booster (13), wherein the control device (15) comprises a signal input (26) for receiving a respective actual value (27) of at least one disturbance variable (3, 6, 8) and a signal output (35) for controlling an electric drive unit (14) of the brake booster (13), and is designed to implement a method according to any of the preceding claims.

8. Electromechanical brake booster (15) having a control device (15) according to claim 7.

9. Motor vehicle (1) having an electromechanical brake booster (13) according to claim 8 and a detection device (26) for detecting a respective actual value (27) of at least one disturbance variable (3, 6, 8), wherein the detection device (29) is coupled to the signal input (26) of the control device (15) of the brake booster (13).

## Revendications

1. Procédé pour le fonctionnement d'un servofrein électromagnétique (13) d'un véhicule automobile (1) pour diminuer la vitesse de déplacement (4) d'un véhicule automobile (1) pendant son roulage, un dispositif de commande (15)
- déterminant une force (11) exercée par un utilisateur (9) sur une pédale de frein (10),
- déterminant, à partir de la force déterminée exercée sur la pédale (11), une pression de freinage à régler (P) au moyen d'une unité de réglage (32) destinée à l'association force exercée sur la pédale-pression de freinage et
- réglant, par le fonctionnement du servofrein (13), la pression de freinage (P) à régler dans les freins à friction (21) du véhicule automobile (1) et provoquant ainsi un ralentissement (22) du véhicule automobile (1) dépendant de la pression de freinage (P) réglée, l'unité de réglage (32) présentant une configuration normalisée (33), dans laquelle une pression de freinage (P) à régler par rapport à la force de pédale (11) est déterminée de manière telle qu'elle provoque un ralentissement normalisé prédéfini (23) du véhicule automobile (1) lorsqu'au moins une grandeur de perturbation prédéfinie (3, 6, 8) présente une valeur normalisée prédéfinie respective (31) et
- l'unité de réglage (32) présentant au moins un paramètre de réglage (35) pour régler une configuration de compensation (34) différente de la configuration normalisée (33) et
- un dispositif de détection (26) détectant une valeur instantanée respective (27) de ladite au moins une grandeur de perturbation (3, 6, 8) et
- la configuration de compensation (34) étant réglée par réglage dudit au moins un paramètre de réglage (35) de l'unité de réglage (32) en fonction d'une différence respective de chaque valeur instantanée déterminée (27) par rapport à la valeur normalisée respective (31),
**caractérisé en ce que**
sur l'unité de réglage (32), la configuration normalisée (33) est mise à disposition par une caractéristique d'amplification (33) et au moins une autre caractéristique d'amplification (34) est mise à disposition pour une configuration de compensation respective (34) et, en fonction de la valeur instantanée détectée respective (27), ladite au moins une grandeur de perturbation (3, 6, 8) est commutée entre les caractéristiques d'amplification (33, 34).

2. Procédé selon la revendication 1, une configuration de compensation (34) étant réglée de manière telle que le ralentissement (22) du véhicule présente un écart plus faible par rapport au ralentissement normalisé (23) que dans le cas de la configuration normalisée (33), lorsque la valeur instantanée respective de ladite au moins une grandeur de perturbation (3, 6, 8) s'écarte de la valeur normalisée respective.

3. Procédé selon l'une quelconque des revendications précédentes, ladite au moins une grandeur de perturbation (8) comprenant une charge (8) du véhicule automobile et la charge actuelle (29) du véhicule automobile (1) étant détectée comme valeur instantanée (27).

4. Procédé selon l'une quelconque des revendications précédentes, ladite au moins une grandeur de perturbation (3) étant une charge d'attelage d'une remorque (3) accrochée au véhicule automobile (1) et la charge d'attelage actuelle (28) étant détectée comme valeur instantanée (27).

5. Procédé selon l'une quelconque des revendications précédentes, ladite au moins une grandeur de perturbation (6) comprenant une pente (6) d'un support de roulage (5) sur lequel le véhicule automobile (1) roule et une valeur d'inclinaison (30) corrélant avec la pente actuelle (6) étant déterminée comme valeur instantanée (27).

6. Procédé selon l'une quelconque des revendications précédentes, le dispositif de détection (29) déterminant la valeur instantanée respective de manière cyclique et ledit au moins un paramètre de réglage (35) étant réglé de manière cyclique.

7. Dispositif de commande (15) pour un servofrein électromécanique (13), le dispositif de commande (15) présentant une entrée de signal (26) pour recevoir une valeur instantanée respective (27) d'au moins une grandeur de perturbation (3, 6, 8) et une sortie de signal (35) pour commander une unité d'entraînement électrique (14) du servofrein (13) et étant conçu pour mettre en oeuvre un procédé selon l'une quelconque des revendications précédentes.

8. Servofrein électromécanique (15) comprenant un dispositif de commande (15) selon la revendication 7.

9. Véhicule automobile (1) présentant un servofrein électromécanique (13) selon la revendication 8 et un dispositif de détection (26) pour détecter une valeur instantanée respective (27) d'au moins une grandeur de perturbation (3, 6, 8), le dispositif de détection (29) étant couplé à une entrée de signal (26) du dispositif de commande (15) du servofrein (13).
